# EUROPÄISCHE PATENTSCHRIFT

(11) **EP 3 721 590 B1**
(45) Veröffentlichungstag und Bekanntmachung des Hinweises auf die Patenterteilung: **03.03.2021**
(21) Anmeldenummer: 19812729.2
(22) Anmeldetag: 22.11.2019
(51) Int. Cl.: H04L 12/40

(54) **VERFAHREN ZUM BETREIBEN EINES NETZWERKTEILNEHMERS UND NETZWERKTEILNEHMER**
METHOD FOR OPERATING A NETWORK PARTICIPANT AND NETWORK PARTICIPANT
PROCÉDÉ POUR FAIRE FONCTIONNER UN ABONNÉ RÉSEAU ET ABONNÉ RÉSEAU

(30) Priorität: 26.11.2018 DE 102018129774
(43) Veröffentlichungstag der Anmeldung: 14.10.2020
(73) Patentinhaber: Beckhoff Automation GmbH, 33415 Verl (DE)
(72) Erfinder: BUNTE, Thorsten, 33335 Gütersloh (DE); KOCH, Benjamin, 33106 Paderborn (DE); VONNAHME, Erik, 33154 Salzkotten (DE)
(74) Vertreter: Patentanwaltskanzlei WILHELM & BECK
(86) Internationale Anmeldenummer: PCT/EP2019/082285
(87) Internationale Veröffentlichungsnummer: WO 2020/109175

(56) Entgegenhaltungen:
- WO-A1-2014/162750
- DE-A1-102014 106 019
- DE-A1-102014 112 082
- US-A1- 2006 268 999

## Beschreibung

Die vorliegende Erfindung betrifft ein Verfahren zum Betreiben eines Netzwerkteilnehmers sowie einen Netzwerkteilnehmer. Diese Patentanmeldung beansprucht die Priorität der deutschen Patentanmeldung 10 2018 129 774.2 vom 26. November 2018, deren Offenbarungsgehalt hiermit durch Rückbezug aufgenommen wird.

Im Stand der Technik (beispielsweise im Dokument WO 2014/162750) sind verschiedene Feldbusprotokolle bekannt. Bei solchen Feldbusprotokollen werden Daten üblicherweise in Übertragungsrahmen übertragen, die unterschiedliche Felder für Adress-, Kontroll- und Statusinformationen, Nutzdaten und Sicherungsinformationen aufweisen. Bei der Verarbeitung eines solchen Übertragungsrahmens in einem Netzwerkteilnehmer werden empfangsseitig die einzelnen Felder identifiziert und die in ihnen enthaltenen Daten entnommen. Senderseitig werden Daten für die Felder in dem Übertragungsrahmen zusammengefügt und formatiert, bevor der Übertragungsrahmen versandt wird.

Die physikalische Übertragung eines Übertragungsrahmens in Form eines Datenstroms kann über eine definierte Schnittstelle erfolgen, die den Datenstrom mit einer definierten Signalbreite und einer definierten Signalrate überträgt. Um eine Übertragungsgeschwindigkeit von 100 Mbps zu erreichen, kann die Übertragung beispielsweise mit einer Signalbreite von 4 Bit und einer Signalrate von 25 MHz erfolgen. In den Netzwerkteilnehmern erfolgt die Verarbeitung der Übertragungsrahmen üblicherweise mit der gleichen Breite und Frequenz, mit der die Übertragung über die physikalische Schnittstelle erfolgt. Die Verarbeitungsfrequenz lässt sich mit verfügbarer Hardware wie FPGAs, ASICs und Prozessoren allerdings nicht beliebig erhöhen.

Eine Aufgabe der vorliegenden Erfindung besteht darin, ein Verfahren zum Betreiben eines Netzwerkteilnehmers anzugeben. Eine weitere Aufgabe der vorliegenden Erfindung besteht darin, einen Netzwerkteilnehmer bereitzustellen. Diese Aufgaben werden durch ein Verfahren zum Betreiben eines Netzwerkteilnehmers und durch einen Netzwerkteilnehmer mit den Merkmalen der unabhängigen Ansprüche gelöst. In den abhängigen Ansprüchen sind verschiedene Weiterbildungen angegeben.

Ein Verfahren zum Betreiben eines Netzwerkteilnehmers umfasst ein Empfangen eines Eingangsdatenstroms, der einen Eingangsübertragungsrahmen gemäß einem Feldbusprotokoll enthält, wobei der Eingangsdatenstrom in zeitlich aufeinanderfolgenden Dateneinheiten empfangen wird, die eine festgelegte Verarbeitungsbreite aufweisen, ein Dekodieren von Feldern des Eingangsübertragungsrahmens mit einer Mehrzahl von hintereinander angeordneten Feldverarbeitungseinheiten, wobei jede Feldverarbeitungseinheit ein festgelegtes Feld des Eingangsübertragungsrahmens dekodiert, und ein Erzeugen eines Ausgangsdatenstroms, der einen Ausgangsübertragungsrahmen gemäß dem Feldbusprotokoll enthält, aus dem Eingangsdatenstrom.

Vorteilhafterweise ermöglicht dieses Verfahren eine parallele Dekodierung mehrerer Felder des Eingangsübertragungsrahmens. Dadurch wird es ermöglicht, die Verarbeitungsbreite der Dateneinheiten so groß zu wählen, dass in einer Dateneinheit mehrere Felder oder Teile mehrerer Felder des Eingangsübertragungsrahmens enthalten sind. Die dadurch ermöglichte große Verarbeitungsbreite gestattet es, den Eingangsdatenstrom mit hoher Übertragungsgeschwindigkeit zu übertragen.

In einer Ausführungsform des Verfahrens erfolgt das Dekodieren von Feldern, während der Eingangsübertragungsrahmen empfangen wird. Dadurch ermöglicht es das Verfahren, den mit dem Eingangsdatenstrom empfangenen Eingangsübertragungsrahmen im Durchlauf zu verarbeiten, also bereits während des Empfangs des Eingangsübertragungsrahmens. Dadurch kann der Eingangsübertragungsrahmen mit einer wesentlich geringeren Latenz verarbeitet werden, als dies bei einem Verfahren möglich wäre, bei dem der Eingangsübertragungsrahmen zunächst vollständig empfangen und erst anschließend verarbeitet wird.

In einer Ausführungsform des Verfahrens erkennt eine erste der Feldverarbeitungseinheiten einen Beginn des Eingangsübertragungsrahmens. Dann werden Startpositionen von Feldern des Eingangsübertragungsrahmens abhängig von einer Position des Beginns des Eingangsübertragungsrahmens ermittelt. Vorteilhafterweise ermöglicht das Verfahren dadurch eine Verarbeitung des im Eingangsdatenstrom enthaltenden Eingangsübertragungsrahmens auch dann, wenn der Eingangsübertragungsrahmen an beliebiger Stelle in einer der zeitlich aufeinanderfolgend empfangenen Dateneinheiten beginnt.

In einer Ausführungsform des Verfahrens umfasst jede Startposition eine Nummer einer Dateneinheit und einen Index innerhalb der Dateneinheit. Das Verfahren nutzt dabei die Tatsache, dass die Reihenfolge und die Breite vieler Felder des Eingangsübertragungsrahmens in dem Feldbusprotokoll festgelegt ist und sich die Startposition dieser Felder dadurch vorteilhafterweise abhängig von der Position des Beginns des Eingangsübertragungsrahmens in einer der Dateneinheiten leicht berechnen lässt. Die Startpositionen anderer Felder des Eingangsübertragungsrahmens lassen sich abhängig von der Startposition und der Länge der vorhergehenden Felder des Eingangsübertragungsrahmens berechnen.

In einer Ausführungsform des Verfahrens umfasst das Dekodieren eines Felds des Eingangsübertragungsrahmens bei einer zweiten der Feldverarbeitungseinheiten ein Auslesen einer Information. Die Information kann beispielsweise eine Kopfdateninformation des Eingangsübertragungsrahmen sein, beispielsweise eine Zieladresse. Die Information kann aber beispielsweise auch ein an den Netzwerkteilnehmer gerichtetes Kommando oder ein von dem Netzwerkteilnehmer zu verarbeitendes Datum sein.

In einer Ausführungsform des Verfahrens verknüpft die zweite Feldverarbeitungseinheit die Information logisch mit dem Ausgangsdatenstrom. Dies ermöglicht es, den Ausgangsdatenstrom abhängig von der aus dem Feld des Eingangsübertragungsrahmens ausgelesenen Information zu manipulieren.

In einer Ausführungsform des Verfahrens wird die Information vor dem Verknüpfen mit dem Ausgangsdatenstrom in einer Registerstufe zwischengespeichert. Vorteilhafterweise werden dadurch Logikpfade zwischen der Verarbeitung des Eingangsdatenstroms und der Verarbeitung des Ausgangsdatenstroms entkoppelt.

In einer Ausführungsform des Verfahrens gibt die zweite Feldverarbeitungseinheit die Information an eine der zweiten Feldverarbeitungseinheit nachfolgende dritte Feldverarbeitungseinheit weiter. Vorteilhafterweise wird es der dritten Feldverarbeitungseinheit dadurch ermöglicht, das von der dritten Feldverarbeitungseinheit dekodierte Feld des Eingangsübertragungsrahmens abhängig von der von der zweiten Feldverarbeitungseinheit ausgelesenen Informationen zu verarbeiten. Dadurch ermöglicht es das Verfahren, Abhängigkeiten zwischen den einzelnen Feldern des Eingangsübertragungsrahmens zu berücksichtigen. Ein besonderer Vorteil des Verfahrens besteht darin, dass auch Abhängigkeiten zwischen Feldern berücksichtigt werden können, die innerhalb einer einzelnen Dateneinheit empfangen werden.

In einer Ausführungsform des Verfahrens gibt die zweite Feldverarbeitungseinheit die Information gemeinsam mit dem Eingangsdatenstrom und dem Ausgangsdatenstrom als Informationsbündel an die dritte Feldverarbeitungseinheit weiter. Vorteilhafterweise werden dadurch alle von der dritten Feldverarbeitungseinheit benötigten Informationen zusammengefasst und gebündelt in dem Informationsbündel übergeben.

In einer Ausführungsform des Verfahrens wird das Informationsbündel zwischen der zweiten Feldverarbeitungseinheit und der dritten Feldverarbeitungseinheit in einer Registerstufe zwischengespeichert. Vorteilhafterweise wird dadurch die kombinatorische Logik der zweiten Feldverarbeitungseinheit von der der dritten Feldverarbeitungseinheit getrennt. Dies ermöglicht eine zeitliche Entkoppelung der Verarbeitung durch die zweite Feldverarbeitungseinheit von der Verarbeitung durch die dritte Feldverarbeitungseinheit. Dadurch werden die zur Verarbeitung durch die Feldverarbeitungseinheiten erforderlichen Logikpfade kürzer, was eine höhere Verarbeitungsfrequenz ermöglichen kann. Dadurch, dass alle von der dritten Feldverarbeitungseinheit benötigten Daten und Informationen in dem Informationsbündel zusammengefasst sind, erfordert die Zwischenspeicherung des Informationsbündels zwischen der zweiten Feldverarbeitungseinheit und der dritten Feldverarbeitungseinheit keine weitergehenden Änderungen an der dritten Feldverarbeitungseinheit.

In einer Ausführungsform des Verfahrens ist das Feldbusprotokoll EtherCAT. In diesem Fall ist der Eingangsübertragungsrahmen ein EtherCAT-Übertragungsrahmen. Vorteilhafterweise ermöglicht das Verfahren eine Übertragung von EtherCAT-Übertragungsrahmen mit hoher Übertragungsgeschwindigkeit.

In einer Ausführungsform des Verfahrens beträgt die Verarbeitungsbreite 64 Bit. Vorteilhafterweise kann bei einer Verarbeitungsbreite von 64 Bit schon mit einer Verarbeitungsfrequenz von 156,25 MHz eine Übertragungsgeschwindigkeit von 10.000 Mbps erreicht werden.

Ein Netzwerkteilnehmer ist ausgebildet, einen Eingangsdatenstrom, der einen Eingangsübertragungsrahmen gemäß einem Feldbusprotokoll enthält, in zeitlich aufeinanderfolgenden Dateneinheiten zu empfangen, die eine festgelegte Verarbeitungsbreite aufweisen, und aus dem Eingangsdatenstrom einen Ausgangsdatenstrom zu erzeugen, der einen Ausgangsübertragungsrahmen gemäß dem Feldbusprotokoll enthält. Dabei weist der Netzwerkteilnehmer eine Mehrzahl von hintereinander angeordneten Feldverarbeitungseinheiten auf. Jede Feldverarbeitungseinheit ist ausgebildet, ein festgelegtes Feld des Eingangsübertragungsrahmens zu dekodieren.

Vorteilhafterweise ermöglicht dieser Netzwerkteilnehmer eine parallele Dekodierung mehrerer Felder des Eingangsübertragungsrahmens. Dadurch wird es ermöglicht, die Verarbeitungsbreite der Dateneinheiten so groß zu wählen, dass in einer Dateneinheit mehrere Felder oder Teile mehrerer Felder des Eingangsübertragungsrahmens enthalten sind. Die dadurch ermöglichte große Verarbeitungsbreite gestattet es, den Eingangsdatenstrom mit hoher Übertragungsgeschwindigkeit zu übertragen.

In einer Ausführungsform des Netzwerkteilnehmers ist eine erste der Feldverarbeitungseinheiten ausgebildet, einen Beginn des Eingangsübertragungsrahmens zu erkennen. Dabei ist der Netzwerkteilnehmer ausgebildet, Startpositionen von Feldern des Eingangsübertragungsrahmens abhängig von einer Position des Beginns des Eingangsübertragungsrahmens zu ermitteln. Vorteilhafterweise kann der Netzwerkteilnehmer dadurch den im Eingangsdatenstrom enthaltenden Eingangsübertragungsrahmen auch dann verarbeiten, wenn der Eingangsübertragungsrahmen an beliebiger Stelle in einer der zeitlich aufeinanderfolgend empfangenen Dateneinheiten beginnt.

In einer Ausführungsform des Netzwerkteilnehmers ist eine zweite der Feldverarbeitungseinheiten so ausgebildet, dass das Dekodieren eines Felds des Eingangsübertragungsrahmens ein Auslesen einer Information umfasst. Die Information kann beispielsweise eine Kopfdateninformation des Eingangsübertragungsrahmen sein, beispielsweise eine Zieladresse. Die Information kann aber beispielsweise auch ein an den Netzwerkteilnehmer gerichtetes Kommando oder ein von dem Netzwerkteilnehmer zu verarbeitendes Datum sein.

In einer Ausführungsform des Netzwerkteilnehmers ist die zweite Feldverarbeitungseinheit ausgebildet, die Information logisch mit dem Ausgangsdatenstrom zu verknüpfen. Dies ermöglicht es, den Ausgangsdatenstrom abhängig von der aus dem Feld des Eingangsübertragungsrahmens ausgelesenen Information zu manipulieren.

In einer Ausführungsform des Netzwerkteilnehmers ist eine Registerstufe vorgesehen, um die Information vor dem Verknüpfen mit dem Ausgangsdatenstrom zwischenzuspeichern. Vorteilhafterweise werden dadurch Logikpfade zwischen der Verarbeitung des Eingangsdatenstroms und der Verarbeitung des Ausgangsdatenstroms entkoppelt.

In einer Ausführungsform des Netzwerkteilnehmers ist die zweite Feldverarbeitungseinheit ausgebildet, die Information an eine der zweiten Feldverarbeitungseinheit nachfolgende dritte Feldverarbeitungseinheit weiterzugeben. Vorteilhafterweise wird es der dritten Feldverarbeitungseinheit dadurch ermöglicht, das von der dritten Feldverarbeitungseinheit dekodierte Feld des Eingangsübertragungsrahmens abhängig von der von der zweiten Feldverarbeitungseinheit ausgelesenen Informationen zu verarbeiten. Dadurch kann der Netzwerkteilnehmer Abhängigkeiten zwischen den einzelnen Feldern des Eingangsübertragungsrahmens berücksichtigen. Ein besonderer Vorteil besteht darin, dass auch Abhängigkeiten zwischen Feldern berücksichtigt werden können, die innerhalb einer einzelnen Dateneinheit empfangen werden.

In einer Ausführungsform des Netzwerkteilnehmers ist die zweite Feldverarbeitungseinheit ausgebildet, die Information gemeinsam mit dem Eingangsdatenstrom und dem Ausgangsdatenstrom als Informationsbündel an die dritte Feldverarbeitungseinheit weiterzugeben. Vorteilhafterweise werden dadurch alle von der dritten Feldverarbeitungseinheit benötigten Informationen zusammengefasst und gebündelt in dem Informationsbündel übergeben.

In einer Ausführungsform des Netzwerkteilnehmers ist eine Registerstufe vorgesehen, um das Informationsbündel zwischen der zweiten Feldverarbeitungseinheit und der dritten Feldverarbeitungseinheit zwischenzuspeichern. Vorteilhafterweise wird dadurch die kombinatorische Logik der zweiten Feldverarbeitungseinheit von der der dritten Feldverarbeitungseinheit getrennt. Die ermöglicht eine zeitliche Entkoppelung der Verarbeitung durch die zweite Feldverarbeitungseinheit von der Verarbeitung durch die dritte Feldverarbeitungseinheit. Dadurch werden die zur Verarbeitung durch die Feldverarbeitungseinheiten erforderlichen Logikpfade kürzer, was eine höhere Verarbeitungsfrequenz ermöglichen kann. Dadurch, dass alle von der dritten Feldverarbeitungseinheit benötigten Daten und Informationen in dem Informationsbündel zusammengefasst sind, erfordert die Zwischenspeicherung des Informationsbündels zwischen der zweiten Feldverarbeitungseinheit und der dritten Feldverarbeitungseinheit keine weitergehenden Änderungen an der dritten Feldverarbeitungseinheit.

Die Erfindung wird im Folgenden anhand von Figuren näher erläutert. Dabei zeigen:
- Fig. 1: eine schematische Darstellung eines Übertragungsrahmens gemäß einem Feldbusprotokoll;
- Fig. 2: eine schematische Darstellung eines Datagramms des Übertragungsrahmens;
- Fig. 3: eine schematische Darstellung einer Verarbeitung eines Datenstroms mit einer festgelegten Verarbeitungsbreite; und
- Fig. 4: eine schematische Darstellung eines Netzwerkteilnehmers.

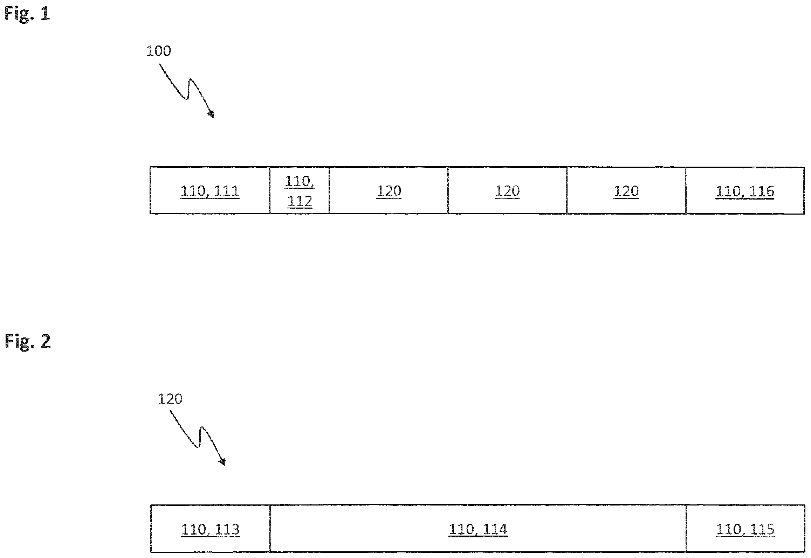

Fig. 1 zeigt eine stark schematisierte Darstellung eines Übertragungsrahmens 100 eines Feldbusprotokolls. Das Feldbusprotokoll kann beispielsweise EtherCAT sein. Das Feldbusprotokoll kann aber beispielsweise auch PROFIBUS oder ein anderes Feldbusprotokoll sein.

Der Übertragungsrahmen 100 fasst über einen Feldbus zu übertragende Daten und Metadaten zusammen. Hierzu weist der Übertragungsrahmen 100 eine Mehrzahl von Feldern 110 auf, die in dem Feldbusprotokoll festgelegt sind. Einzelne Felder 110 des Übertragungsrahmens 100 können eine feste, in dem Feldbusprotokoll festgelegte Länge aufweisen. Andere Felder 110 des Übertragungsrahmens 100 können eine variable Länge aufweisen. Die Reihenfolge der Felder 110 des Übertragungsrahmens 100 ist in dem Feldbusprotokoll festgelegt. Dabei können sich einzelne Felder 110 des Übertragungsrahmens 100 allerdings wiederholen, wobei die Anzahl der Wiederholungen variabel sein kann.

In dem schematischen und vereinfachten Beispiel der Fig. 1 umfasst der Übertragungsrahmen 100 ein erstes Feld 110, 111, ein dem ersten Feld 110, 111 nachfolgendes zweites Feld 110, 112 und drei Datagramme 120, die dem zweiten Feld 110, 112 nachfolgen und hintereinander angeordnet sind. Nach den Datagrammen 120 folgt ein sechstes Feld 110, 116. Die Anzahl von drei Datagrammen 120 ist lediglich beispielhaft gewählt. Es könnten auch nur ein oder zwei oder mehr als drei Datagramme 120 vorhanden sein.

Fig. 2 zeigt eine schematisierte und vereinfachte Darstellung eines der Datagramme 120 des Übertragungsrahmens 100. Jedes der Datagramme 120 weist ein drittes Feld 110, 113, ein dem dritten Feld 110, 113 nachfolgendes viertes Feld 110, 114 und ein dem vierten Feld 110, 114 nachfolgendes fünftes Feld 110, 115 auf.

Da der in Fig. 1 gezeigte Übertragungsrahmen 100 insgesamt drei Datagramme 120 aufweist, weist der Übertragungsrahmen 100 insgesamt drei Wiederholungen des dritten Felds 110, 113, des vierten Felds 110, 114 und des fünften Felds 110, 115 auf.

Der Übertragungsrahmen 100 und die Datagramme 120 des Übertragungsrahmens 100 können mehr Felder 110 als die in den Fig. 1 und 2 gezeigten ersten bis sechsten Felder 111, 112, 113, 114, 115, 116 aufweisen.

Das erste Feld 110, 111 kann beispielsweise Kopfdaten des Übertragungsrahmens 100 enthalten. Solche Kopfdaten können beispielsweise eine Absenderadresse, eine Zieladresse und einen Typ des Übertragungsrahmens 100 umfassen. Falls der Übertragungsrahmen 100 ein Übertragungsrahmen gemäß dem EtherCAT-Standard ist, können diese Kopfdaten beispielsweise als Ethernet-Kopfdaten ausgebildet sein. Anstelle des nur einen ersten Felds 110, 111 könnten auch mehrere Felder 110 vorgesehen sein, die jeweils unterschiedliche Kopfdaten enthalten. Diese Felder können beispielsweise Längen von 48 Bit oder von 16 Bit aufweisen.

Das zweite Feld 110, 112 des Übertragungsrahmens 100 kann beispielsweise weitere Kopfdaten aufweisen. Falls der Übertragungsrahmen 100 ein Übertragungsrahmen gemäß dem EtherCAT-Standard ist, kann das zweite Feld 110, 112 beispielsweise EtherCAT-Kopfdaten aufweisen. Das zweite Feld 110, 112 des Übertragungsrahmens 100 ist im dargestellten Beispiel kürzer als das erste Feld 110, 111. Das zweite Feld 110, 112 kann beispielsweise eine Länge von 16 Bit bzw. 2 Byte aufweisen.

Das sechste Feld 110, 116 des Übertragungsrahmens 100 kann beispielsweise eine Prüfsumme enthalten, anhand der überprüft werden kann, ob der Übertragungsrahmen 100 fehlerfrei übertragen worden ist. Das sechste Feld 110, 116 kann beispielsweise eine Länge von 32 Bit bzw. 4 Byte aufweisen.

Das dritte Feld 110, 113 des Übertragungsrahmens 100 kann beispielsweise Datagramm-Kopfdaten enthalten. Diese Datagramm-Kopfdaten können beispielsweise Kommandos, Adressen und Längenangaben umfassen. Wiederum können anstelle des nur einen dritten Feldes 110, 113 mehrere getrennte Felder 110 mit unterschiedlichen Datagramm-Kopfdaten in den Datagrammen 120 vorhanden sein.

Das fünfte Feld 110, 115, das im dargestellten Beispiel das letzte Feld 110 jedes Datagramms 120 bildet, kann beispielsweise einen Zähler aufweisen.

Im in Fig. 1 und 2 gezeigten Beispiel weisen das erste Feld 110, 111, das zweite Feld 110, 112, das dritte Feld 110, 113, das fünfte Feld 110, 115 und das sechste Feld 110, 116 jeweils feste Längen auf, die im Feldbusprotokoll festgelegt sind.

Das vierte Feld 110, 114, das bei jedem Datagramm 120 vorhanden ist, kann beispielsweise Nutzdaten enthalten, die von Netzwerkteilnehmern in einem nach dem Feldbusprotokoll betriebenen Netzwerk verarbeitet werden. Das vierte Feld 110, 114 kann eine variable Länge aufweisen, die sich bei den verschiedenen Datagrammen 120 des Übertragungsrahmens 100 unterscheidet. Dadurch können auch die einzelnen Datagramme 120 des Übertragungsrahmens 100 unterschiedliche Längen aufweisen.

Die Länge des vierten Felds 110, 114 kann bei jedem Datagramm 120 in den beispielhaft im dritten Feld 110, 113 des jeweiligen Datagramms 120 hinterlegten Datagramm-Kopfdaten angegeben sein. Demnach erfordert eine korrekte Erkennung des vierten Felds 110, 114 bei jedem Datagramm 120 ein Auslesen der im dritten Feld 110, 113 des jeweiligen Datagramms 120 enthaltenen Information. Die beispielhaft im dritten Feld 110, 113 enthaltenen Datagramm-Kopfdaten jedes Datagramms 120 können beispielsweise auch ein Kommando umfassen, das angibt, wie mit den im vierten Feld 110, 114 des jeweiligen Datagramms 120 enthaltenen Nutzdaten zu verfahren ist. Somit bestehen zwischen den einzelnen Feldern 110 des Übertragungsrahmens 100 Abhängigkeiten. Die Verarbeitung einzelner Felder 110 des Übertragungsrahmens 100 kann von in vorhergehenden oder in nachfolgenden Feldern 110 des Übertragungsrahmens 100 enthaltener Information abhängig sein.

In einem nach dem Feldbusprotokoll betriebenen Datennetzwerk, beispielsweise in einem EtherCAT-Netzwerk, werden Übertragungsrahmen 100 in Form von Datenströmen zwischen Netzwerkteilnehmern des Datennetzwerks übertragen. Eine hierbei verwendete physikalische Übertragungsschicht (PHY) hat häufig eine definierte Schnittstelle, die die Daten des Übertragungsrahmens 100 mit einer definierten Signalbreite und Signalrate überträgt. Aus dem mathematischen Produkt der Signalbreite und der Signalrate ergibt sich dabei eine erreichte Signalübertragungsgeschwindigkeit. Beispielsweise kann in einem 100 Mbps-Netzwerk eine Übertragung mit einer Signalbreite von 4 Bit und einer Signalrate von 25 MHz erfolgen. In einem 10.000 Mbps-Netzwerk kann die Übertragung beispielsweise mit einer Signalbreite von 32 Bit und einer Signalrate von 156,25 MHz bei Verwendung eines Double-Data-Rate-Übertragungsverfahrens erfolgen.

In den Netzwerkteilnehmern des Netzwerks werden empfangene Übertragungsrahmen 100 verarbeitet, indem die einzelnen Felder 110 identifiziert und die darin enthaltenen Informationen entnommen werden. Zum Aussenden von Übertragungsrahmen 100 werden die notwendigen Daten zusammengefügt und formatiert, bevor der Übertragungsrahmen 100 versandt wird. Die Verarbeitung der Übertragungsrahmen 100 erfolgt mit einer Verarbeitungsbreite und einer Verarbeitungsfrequenz. Die Verarbeitungsbreite und die Verarbeitungsfrequenz können der Signalbreite und der Signalrate der physikalischen Schnittstelle entsprechen. Der maximalen Größe der Verarbeitungsfrequenz sind durch die Leistungsfähigkeit verfügbarer Hardware wie FPGAs, ASICs und Prozessoren allerdings Grenzen gesetzt. Um eine Verarbeitung der Übertragungsrahmen 100 in einem Netzwerkteilnehmer auch bei einer hohen Signalübertragungsgeschwindigkeit zu ermöglichen, kann es daher erforderlich sein, die Verarbeitungsbreite zu erhöhen, um die Verarbeitungsfrequenz entsprechend reduzieren zu können. Beispielsweise kann die Verarbeitung der Übertragungsrahmen 100 in einem 10.000 Mbps-Netzwerk mit einer Verarbeitungsbreite von 64 Bit und einer Verarbeitungsfrequenz von 156,25 MHz erfolgen.

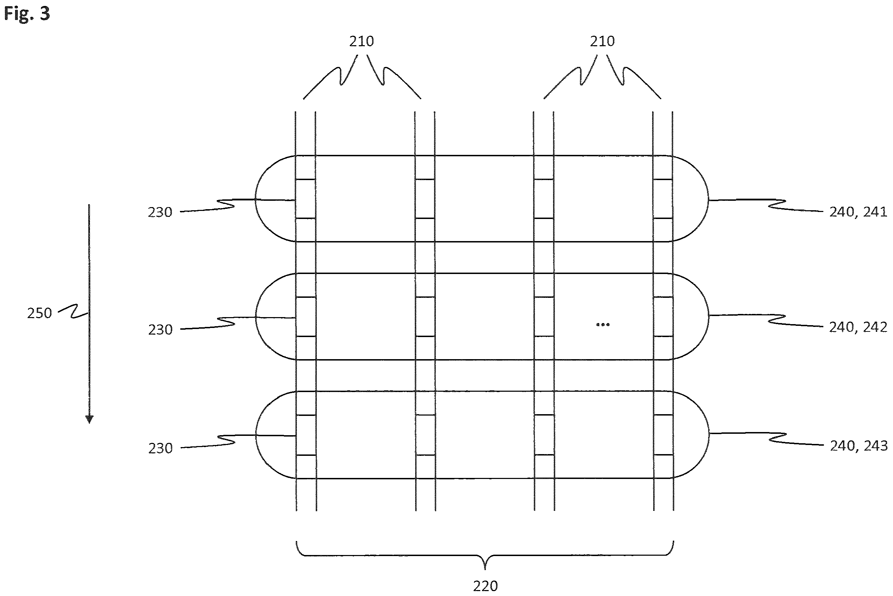

Eine große Verarbeitungsbreite erschwert allerdings die Verarbeitung der Übertragungsrahmen 100, wie nachfolgend anhand der Fig. 3 erläutert wird. Fig. 3 zeigt eine Mehrzahl von Byte-Spuren 210, über die zeitlich aufeinanderfolgende Dateneinheiten 240 mit einer festgelegten Verarbeitungsbreite 220 eintreffen. Jede Dateneinheit 240 umfasst eine der Anzahl der Byte-Spuren 210 entspreche Anzahl Bytes 230. Die Anzahl der Byte-Spuren 210, beziehungsweise die Anzahl von Bytes 230 pro Dateneinheit 240 entspricht der Verarbeitungsbreite 220. Bei einer Verarbeitungsbreite 220 von 64 Bit sind also 8 Byte-Spuren 210 vorhanden und jede Dateneinheit 240 umfasst 8 Bytes 230, also 64 Bit. In Fig. 3 sind der Übersichtlichkeit halber nur vier Byte-Spuren 210 gezeigt. Die Dateneinheiten 240 treffen, wie durch den Pfeil 250 symbolisch angedeutet, zeitlich aufeinanderfolgend über die Byte-Spuren 210 ein. Auf eine erste Dateneinheit 240, 241 folgt eine zweite Dateneinheit 240, 242, auf diese folgt eine dritte Dateneinheit 240, 243 usw.

Ein in Form der Dateneinheiten 240 eintreffender Übertragungsrahmen 100 kann an einer beliebigen Stelle innerhalb einer Dateneinheit 240 beginnen, also bei einem beliebigen Byte 230 der Dateneinheit 240 beziehungsweise auf einer beliebigen Byte-Spur 210. Dabei kann der Beginn des Übertragungsrahmens 100 aber durch eine dem Übertragungsrahmen 100 vorangehende Präambel gekennzeichnet sein, was eine Erkennung des Beginns des Übertragungsrahmens 100 ermöglicht.

Einzelne Felder 110 eines Übertragungsrahmens 100 können eine Länge aufweisen, die größer als die Verarbeitungsbreite 220 ist. Im in Fig. 1 und 2 gezeigten Beispiel des Übertragungsrahmens 100 kann das vierte Feld 110, 114 eine Länge aufweisen, die größer als die Verarbeitungsbreite 220 ist. Ein solches Feld 110 des Übertragungsrahmens 100 erstreckt sich dann über mehrere zeitlich aufeinanderfolgende Dateneinheiten 240. Auch Felder 110 des Übertragungsrahmens 100, deren Länge kürzer als die Verarbeitungsbreite 220 ist, können sich über mehrere zeitlich aufeinanderfolgende Dateneinheiten 240 erstrecken, wenn das betreffende Feld 110 erst nahe am Ende einer Dateneinheit 240 beginnt.

Einige Felder 110 des Übertragungsrahmens 100 weisen eine Länge auf, die kleiner als die Verarbeitungsbreite 220 ist. Dies hat zur Folge, dass innerhalb einer einzigen Dateneinheit 240 mehrere aufeinanderfolgende Felder 110 des Übertragungsrahmens 100 oder zumindest Teile mehrerer aufeinanderfolgender Felder 110 eines Übertragungsrahmens 100 liegen können. In einem solchen Fall müssen die in einer gemeinsamen Dateneinheit 240 liegenden Felder 110 des Übertragungsrahmens 100 gleichzeitig parallel verarbeitet werden. Dies trifft insbesondere dann zu, wenn zwischen den in einer gemeinsamen Dateneinheit 240 liegenden Feldern 110 des Übertragungsrahmens 100 Abhängigkeiten bestehen.

Falls die Verarbeitungsbreite 220 größer als die Mindestlänge eines Datagramms 120 ist, so können auch mehrere Datagramme 120 eines Übertragungsrahmens 100 gemeinsam in einer Dateneinheit 240 liegen. In diesem Fall muss auch eine parallele Verarbeitung dieser mehreren Datagramme 120 erfolgen. Falls der Übertragungsrahmen 100 ein EtherCAT-Übertragungsrahmen ist und die Verarbeitungsbreite 220 64 Bit beträgt, kann dieser Fall allerdings nicht auftreten, da die Datagramme 120 bei EtherCAT-Übertragungsrahmen eine Mindestlänge aufweisen, die größer als 64 Bit ist.

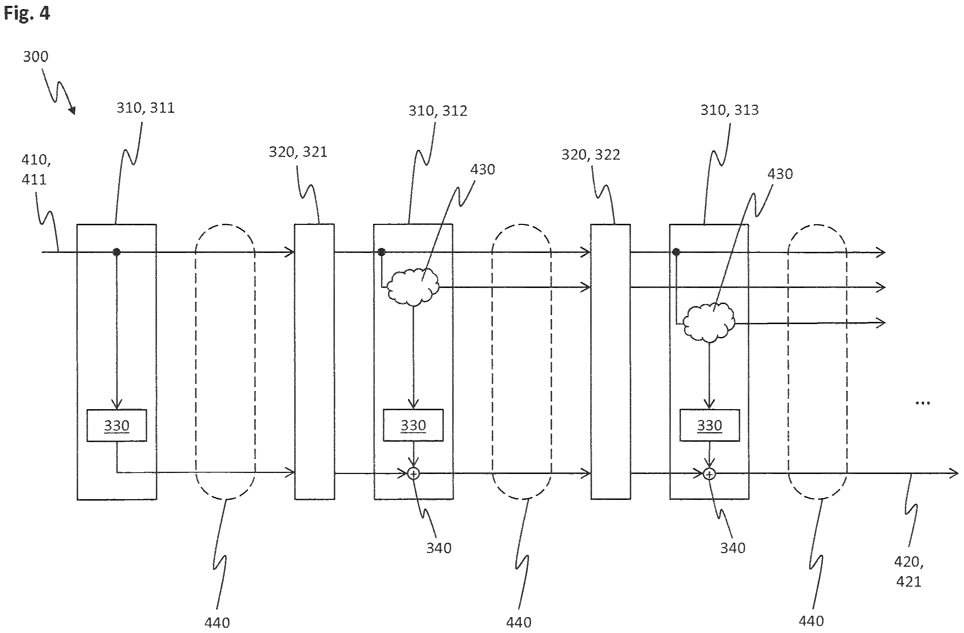

Fig. 4 zeigt eine sehr stark schematisierte Darstellung eines Netzwerkteilnehmers 300. Der Netzwerkteilnehmer 300 ist zur Verwendung in einem Datennetzwerk vorgesehen, das nach dem Feldbusprotokoll betrieben wird. Der Netzwerkteilnehmer 300 ist dazu ausgebildet, einen Eingangsdatenstrom 410 zu verarbeiten und aus dem Eingangsdatenstrom 410 einen Ausgangsdatenstrom 420 zu erzeugen. Dabei weist der Eingangsdatenstrom 410 Eingangsübertragungsrahmen 100, 411 gemäß dem Feldbusprotokoll auf, die also wie der in Fig. 1 schematisch dargestellte Übertragungsrahmen 100 ausgebildet sind. Der Ausgangsdatenstrom 420 wird mit Ausgangsübertragungsrahmen 100, 421 erzeugt, die ebenfalls dem Feldbusprotokoll entsprechen und demnach wie der Übertragungsrahmen 100 der Fig. 1 ausgebildet sind. Nachfolgend wird die Verarbeitung eines mit dem Eingangsdatenstrom 410 empfangenen Eingangsübertragungsrahmens 100, 411 durch den Netzwerkteilnehmer 300 beschrieben.

Wie vorstehend anhand der Fig. 3 beschrieben, trifft der Eingangsdatenstrom 410 in zeitlich aufeinanderfolgenden Dateneinheiten 240 ein, die jeweils die Verarbeitungsbreite 220 aufweisen.

Der Netzwerkteilnehmer 300 weist eine Mehrzahl von hintereinander angeordneten Feldverarbeitungseinheiten 310 auf. Zumindest einige dieser Feldverarbeitungseinheiten 310 sind dazu ausgebildet, jeweils ein festgelegtes Feld 110 des Eingangsübertragungsrahmens 100, 411 zu dekodieren. Die Anzahl der Feldverarbeitungseinheiten 310 des Netzwerkteilnehmers 300 kann daher so groß oder größer sein wie die Zahl der unterschiedlichen Felder 110 der Übertragungsrahmen 100 des Feldbusprotokolls.

Im in Fig. 4 schematisch gezeigten Beispiel weist der Netzwerkteilnehmer 300 eine erste Feldverarbeitungseinheit 310, 311, eine hinter der ersten Feldverarbeitungseinheit 310, 311 angeordnete zweite Feldverarbeitungseinheit 310, 312 und eine hinter der zweiten Feldverarbeitungseinheit 310, 312 angeordnete dritte Feldverarbeitungseinheit 310, 313 auf. In den meisten Varianten wird der Netzwerkteilnehmer 300 jedoch mehr als drei Feldverarbeitungseinheiten 310 aufweisen.

Zusätzlich kann der Netzwerkteilnehmer 300 weitere Feldverarbeitungseinheiten 310 für weitere Zwecke aufweisen. Beispielsweise kann die erste Feldverarbeitungseinheit 310, 311 des Netzwerkteilnehmers 300 dazu ausgebildet sein, einen Beginn des mit dem Eingangsdatenstrom 410 empfangenen Eingangsübertragungsrahmens 100, 411 zu erkennen. Die Erkennung des Beginns des Eingangsübertragungsrahmens 100, 411 kann beispielsweise durch Erkennen einer dem Eingangsübertragungsrahmen 100, 411 vorgelagerten Präambel erfolgen.

Das Dekodieren der Felder 110 des Eingangsübertragungsrahmens 100, 411 erfolgt noch während der Eingangsübertragungsrahmen 100, 411 mit dem Eingangsdatenstrom 410 empfangen wird. Die Verarbeitung des Eingangsübertragungsrahmens 100, 411 durch den Netzwerkteilnehmer 300 erfolgt damit im Durchlauf, ohne dass der Eingangsübertragungsrahmen 100, 411 vor seiner Verarbeitung vollständig empfangen wird.

Der Ausgangsdatenstrom 420 mit dem Ausgangsübertragungsrahmen 100, 421 wird durch den Netzwerkteilnehmer 300 aus dem Eingangsdatenstrom 410 mit dem Eingangsübertragungsrahmen 100, 411 erzeugt. Die erste Feldverarbeitungseinheit 311 überträgt hierfür die mit dem Eingangsdatenstrom 410 empfangenen Dateneinheiten 240 in den Ausgangsdatenstrom 420. Damit entspricht der Ausgangsdatenstrom 420 auf der Stufe der ersten Feldverarbeitungseinheit 311 dem Eingangsdatenstrom 410. Die hinter der ersten Feldverarbeitungseinheit 310, 311 angeordneten Feldverarbeitungseinheiten 310 können den Ausgangsdatenstrom 420 modifizieren.

Zwischen den Feldverarbeitungseinheiten 310 des Netzwerkteilnehmers 300 werden Informationsbündel 440 weitergegeben. Die Informationsbündel 440 umfassen den Eingangsdatenstrom 410 und den Ausgangsdatenstrom 420. Außerdem umfassen die Informationsbündel 440 von den Feldverarbeitungseinheiten 310 gewonnene Informationen 430, beispielsweise beim Dekodieren der Felder 110 des Eingangsübertragungsrahmens 411 ausgelesene Informationen 430.

Die erste Feldverarbeitungseinheit 310, 311 des Netzwerkteilnehmers 300 ist ausgebildet, den Beginn des Eingangsübertragungsrahmens 100, 411 in einer eintreffenden Dateneinheit 240 zu erkennen. Der Beginn des Eingangsübertragungsrahmens 411 stellt gleichzeitig den Beginn des ersten Felds 110, 111 des Eingangsübertragungsrahmens 100, 411 dar.

Falls die Länge des ersten Felds 110, 111 des Eingangsübertragungsrahmens 100, 411 festgelegt ist, kann aus der Startposition des ersten Felds 110, 111 des Eingangsübertragungsrahmens 100, 411 auch die Startposition des zweiten Felds 110, 112 ermittelt werden. Die gilt entsprechend für die weiteren Felder 110 des Eingangsübertragungsrahmens 110, 411. Die hierzu notwendige Information wird ebenfalls als Teil der Informationsbündel 440 zwischen den Feldverarbeitungseinheiten 310 des Netzwerkteilnehmers 300 weitergegeben. Die Startposition eines Felds 110 des Eingangsübertragungsrahmens 100, 411 kann beispielsweise eine Nummer der bei dem Netzwerkteilnehmer 300 eintreffenden Dateneinheiten 240 und einen Index innerhalb der Dateneinheit 240, also die Nummer der Byte-Spur 210, umfassen.

Bei Feldern 110 des Eingangsübertragungsrahmens 100, 411, die eine variable Länge aufweisen, im anhand der Fig. 1 und 2 erläuterten Beispiel also etwa bei dem vierten Feld 110, 114, kann die Startposition des nachfolgenden Felds 110 anhand von in weiteren Feldern 110 des Eingangsübertragungsrahmens 100, 411 übermittelten Längeninformationen ermittelt werden. Auch in diesem Fall wird die notwendige Information als Teil der Informationsbündel 440 zwischen den Feldverarbeitungseinheiten 310 des Netzwerkteilnehmers 300 weitergegeben.

Die zweite Feldverarbeitungseinheit 310, 312 und die dritte Feldverarbeitungseinheit 310, 313 des Netzwerkteilnehmers 300 sind jeweils dazu ausgebildet, ein festgelegtes Feld 110 des Eingangsübertragungsrahmens 100, 411 zu dekodieren. Das Dekodieren des jeweiligen Felds 110 des Eingangsübertragungsrahmens 100, 411 umfasst bei diesen Feldverarbeitungseinheiten 310, 312, 313 jeweils ein Auslesen einer Information 430 aus dem entsprechenden Feld 110 des Eingangsübertragungsrahmens 100, 411. Die zweite Feldverarbeitungseinheit 310, 312 des Netzwerkteilnehmers 300 kann beispielsweise dazu ausgebildet sein, das erste Feld 110, 111 des Eingangsübertragungsrahmens 100, 411 zu dekodieren und dadurch eine erste Information 430, 431 zu gewinnen. Die dritte Feldverarbeitungseinheit 310, 313 kann beispielsweise dazu ausgebildet sein, das zweite Feld 110, 112 des Eingangsübertragungsrahmens 100, 411 zu dekodieren und dadurch eine zweite Information 430, 432 zu gewinnen. Die ausgelesene Information 430 wird von den Feldverarbeitungseinheiten 310 jeweils als Teil des Informationsbündels 440 an die nachfolgenden Feldverarbeitungseinheiten 310 weitergeben.

Zwischen den Feldverarbeitungseinheiten 310 des Netzwerkteilnehmers 300 können Registerstufen 320 angeordnet sein, in denen die Informationsbündel 440 zwischengespeichert werden. Im dargestellten Beispiel ist zwischen der ersten Feldverarbeitungseinheit 310, 311 und der zweiten Feldverarbeitungseinheit 310, 312 eine erste Registerstufe 320, 321 angeordnet. Zwischen der zweiten Feldverarbeitungseinheit 310, 312 und der dritten Feldverarbeitungseinheit 310, 313 ist eine zweite Registerstufe 320, 322 angeordnet.

Durch die Registerstufen 320 erfolgt eine Aufteilung der kombinatorischen Logik der einzelnen Feldverarbeitungseinheiten 310 des Netzwerkteilnehmers 300 und dadurch eine zeitliche Entkopplung der Verarbeitung durch dir einzelnen Feldverarbeitungseinheiten 310. Dadurch werden die einzelnen Logikpfade des Netzwerkteilnehmers 300 kürzer. Dies kann es ermöglichen, den Netzwerkteilnehmer 300 mit einer höheren Verarbeitungsfrequenz zu betreiben.

Die Registerstufen 320 können allerdings auch entfallen. Ebenfalls möglich ist, lediglich zwischen einigen der Feldverarbeitungseinheiten 310 Registerstufen 320 vorzusehen, die Informationsbündel 440 zwischen anderen Feldverarbeitungseinheiten 310 des Netzwerkteilnehmers 300 aber ohne zwischengeordnete Registerstufen 320 weiterzugeben.

Die Registerstufen 320 können als Teile der Feldverarbeitungseinheiten 310 implementiert werden. Beispielsweise kann die erste Registerstufe 320, 321 als Teil der zweiten Feldverarbeitungseinheit 310, 312 und die zweite Registerstufe 320, 322 als Teil der dritten Feldverarbeitungseinheit 310, 313 implementiert werden.

Die Feldverarbeitungseinheiten 310 des Netzwerkteilnehmers 300 können auch dazu ausgebildet sein, durch Dekodieren der Felder 110 des Eingangsübertragungsrahmens 100, 411 gewonnene Information 430 logisch mit dem Ausgangsdatenstrom 420 zu verknüpfen, um eine Modifikation des Ausgangsdatenstroms 420 mit dem Ausgangsübertragungsrahmen 100, 421 zu veranlassen. Dies ist in der schematischen Darstellung der Fig. 4 durch logische Verknüpfungen 340 angedeutet.

Neben den optionalen Registerstufen 320 können bei dem Netzwerkteilnehmer 300 weitere Registerstufen vorgesehen sein, die eine Taktverzögerung bewirken, um bei durch den Netzwerkteilnehmer 300 durchgeführten Lesezugriffen auf die Lesedaten zu warten. Diese Registerstufen sind in der schematischen Darstellung der Fig. 4 nicht gezeigt.

Es kann bei jeder Feldverarbeitungseinheit 310 eine weitere Registerstufe 330 zwischen den Pfaden für den Eingangsdatenstrom 410 und den Ausgangsdatenstrom 420 vorgesehen sein, die die jeweiligen Logikpfade entkoppelt. Hierdurch wird es ermöglicht, Lese- und Schreibzugriffe durchzuführen, die zwei getrennte Zugriffe erfordern. Die hierfür erforderlichen Verzögerungen könnten aber auch an anderer Stelle des Netzwerkteilnehmers 300 vorgesehen sein. Dann können die weiteren Registerstufen 330 entfallen.

### Bezugszeichenliste

- 100: Übertragungsrahmen
- 110: Feld
- 111: erstes Feld
- 112: zweites Feld
- 113: drittes Feld
- 114: viertes Feld
- 115: fünftes Feld
- 116: sechstes Feld
- 120: Datagramm

- 210: Byte-Spur
- 220: Verarbeitungsbreite
- 230: Byte
- 240: Dateneinheit
- 241: erste Dateneinheit
- 242: zweite Dateneinheit
- 243: dritte Dateneinheit
- 250: Zeitablauf

- 300: Netzwerkteilnehmer
- 310: Feldverarbeitungseinheit
- 311: erste Feldverarbeitungseinheit
- 312: zweite Feldverarbeitungseinheit
- 313: dritte Feldverarbeitungseinheit
- 320: Registerstufe
- 321: erste Registerstufe
- 322: zweite Registerstufe
- 330: weitere Registerstufe
- 340: logische Verknüpfung

- 410: Eingangsdatenstrom
- 411: Eingangsübertragungsrahmen
- 420: Ausgangsdatenstrom
- 421: Ausgangsübertragungsrahmen
- 430: Information
- 431: erste Information
- 432: zweite Information
- 440: Informationsbündel

## Patentansprüche

1. Verfahren zum Betreiben eines Netzwerkteilnehmers (300),
umfassend:
- Empfangen eines Eingangsdatenstroms (410), der einen Eingangsübertragungsrahmen (100, 411) gemäß einem Feldbusprotokoll enthält,
wobei der Eingangsdatenstrom (410) in zeitlich aufeinanderfolgenden Dateneinheiten (240) empfangen wird, die eine festgelegte Verarbeitungsbreite (220) aufweisen;
- Dekodieren von Feldern (110) des Eingangsübertragungsrahmens (100, 411) mit einer Mehrzahl von hintereinander angeordneten Feldverarbeitungseinheiten (310), wobei jede Feldverarbeitungseinheit (310) ein festgelegtes Feld (110) des Eingangsübertragungsrahmens (100, 411) dekodiert;
- Erzeugen eines Ausgangsdatenstroms (420), der einen Ausgangsübertragungsrahmen (100, 421) gemäß dem Feldbusprotokoll enthält, aus dem Eingangsdatenstrom (410) .

2. Verfahren gemäß Anspruch 1,
wobei das Dekodieren von Feldern (110) erfolgt, während der Eingangsübertragungsrahmen (100, 411) empfangen wird.

3. Verfahren gemäß einem der vorhergehenden Ansprüche,
wobei eine erste der Feldverarbeitungseinheiten (310, 311) einen Beginn des Eingangsübertragungsrahmens (100, 411) erkennt,
wobei Startpositionen von Feldern (110) des Eingangsübertragungsrahmens (100, 411) abhängig von einer Position des Beginns des Eingangsübertragungsrahmens (100, 411) ermittelt werden.

4. Verfahren gemäß Anspruch 3,
wobei jede Startposition eine Nummer einer Dateneinheit (240) und einen Index innerhalb der Dateneinheit (240) umfasst.

5. Verfahren gemäß einem der vorhergehenden Ansprüche,
wobei das Dekodieren eines Felds (110) des Eingangsübertragungsrahmens (100, 411) bei einer zweiten der Feldverarbeitungseinheiten (310, 312) ein Auslesen einer Information (430) umfasst.

6. Verfahren gemäß Anspruch 5,
wobei die zweite Feldverarbeitungseinheit (310, 312) die Information (430) logisch mit dem Ausgangsdatenstrom (420) verknüpft.

7. Verfahren gemäß Anspruch 6,
wobei die Information (430) vor dem Verknüpfen mit dem Ausgangsdatenstrom (420) in einer Registerstufe (330) zwischengespeichert wird.

8. Verfahren gemäß einem der Ansprüche 5 bis 7,
wobei die zweite Feldverarbeitungseinheit (310, 312) die Information (430) an eine der zweiten Feldverarbeitungseinheit (310, 312) nachfolgende dritte Feldverarbeitungseinheit (310, 313) weitergibt.

9. Verfahren gemäß Anspruch 8,
wobei die zweite Feldverarbeitungseinheit (310, 312) die Information (430) gemeinsam mit dem Eingangsdatenstrom (410) und dem Ausgangsdatenstrom (420) als Informationsbündel (440) an die dritte Feldverarbeitungseinheit (310, 313) weitergibt.

10. Verfahren gemäß Anspruch 9,
wobei das Informationsbündel (440) zwischen der zweiten Feldverarbeitungseinheit (310, 312) und der dritten Feldverarbeitungseinheit (310, 313) in einer Registerstufe (320) zwischengespeichert wird.

11. Verfahren gemäß einem der vorhergehenden Ansprüche,
wobei das Feldbusprotokoll EtherCAT ist, wobei der Eingangsübertragungsrahmen (100, 411) ein EtherCAT-Übertragungsrahmen ist.

12. Verfahren gemäß einem der vorhergehenden Ansprüche,
wobei die Verarbeitungsbreite (220) 64 Bit beträgt.

13. Netzwerkteilnehmer (300)
der ausgebildet ist, einen Eingangsdatenstrom (410), der einen Eingangsübertragungsrahmen (100, 411) gemäß einem Feldbusprotokoll enthält, in zeitlich aufeinanderfolgenden Dateneinheiten (240) zu empfangen, die eine festgelegte Verarbeitungsbreite (220) aufweisen, und aus dem Eingangsdatenstrom (410) einen Ausgangsdatenstrom (420) zu erzeugen, der einen Ausgangsübertragungsrahmen (100, 421) gemäß dem Feldbusprotokoll enthält,
wobei der Netzwerkteilnehmer (300) eine Mehrzahl von hintereinander angeordneten Feldverarbeitungseinheiten (310) aufweist, wobei jede Feldverarbeitungseinheit (310) ausgebildet ist, ein festgelegtes Feld (110) des Eingangsübertragungsrahmens (100, 411) zu dekodieren.

14. Netzwerkteilnehmer (300) gemäß Anspruch 13,
wobei eine erste der Feldverarbeitungseinheiten (310, 311) ausgebildet ist, einen Beginn des Eingangsübertragungsrahmens (100, 411) zu erkennen,
wobei der Netzwerkteilnehmer (300) ausgebildet ist, Startpositionen von Feldern (110) des Eingangsübertragungsrahmens (100, 411) abhängig von einer Position des Beginns des Eingangsübertragungsrahmens (100, 411) zu ermitteln.

15. Netzwerkteilnehmer (300) gemäß einem der Ansprüche 13 und 14,
wobei eine zweite der Feldverarbeitungseinheiten (310, 312) so ausgebildet ist, dass das Dekodieren eines Felds (110) des Eingangsübertragungsrahmens (100, 411) ein Auslesen einer Information (430) umfasst.

16. Netzwerkteilnehmer (300) gemäß Anspruch 15,
wobei die zweite Feldverarbeitungseinheit (310, 312) ausgebildet ist, die Information (430) logisch mit dem Ausgangsdatenstrom (420) zu verknüpfen.

17. Netzwerkteilnehmer (300) gemäß Anspruch 16,
wobei eine Registerstufe (330) vorgesehen ist, um die Information (430) vor dem Verknüpfen mit dem Ausgangsdatenstrom (420) zwischenzuspeichern.

18. Netzwerkteilnehmer (300) gemäß einem der Ansprüche 15 bis 17,
wobei die zweite Feldverarbeitungseinheit (310, 312) ausgebildet ist, die Information (430) an eine der zweiten Feldverarbeitungseinheit (310, 312) nachfolgende dritte Feldverarbeitungseinheit (310, 313) weiterzugeben.

19. Netzwerkteilnehmer (300) gemäß Anspruch 18,
wobei die zweite Feldverarbeitungseinheit (310, 312) ausgebildet ist, die Information (430) gemeinsam mit dem Eingangsdatenstrom (410) und dem Ausgangsdatenstrom (420) als Informationsbündel (440) an die dritte Feldverarbeitungseinheit (310, 313) weiterzugeben.

20. Netzwerkteilnehmer (300) gemäß Anspruch 19,
wobei eine Registerstufe (320) vorgesehen ist, um das Informationsbündel (440) zwischen der zweiten Feldverarbeitungseinheit (310, 312) und der dritten Feldverarbeitungseinheit (310, 313) zwischenzuspeichern.

## Claims

1. Method for operating a network subscriber (300), comprising:
- receiving an input data stream (410) which contains an input transmission frame (100, 411) in accordance with a field bus protocol,
wherein the input data stream (410) is received in temporally successive data units (240) which have a defined processing width (220);
- decoding fields (110) of the input transmission frame (100, 411) using a plurality of field processing units (310) arranged behind one another, wherein each field processing unit (310) decodes a defined field (110) of the input transmission frame (100, 411);
- generating an output data stream (420) which contains an output transmission frame (100, 421) in accordance with the field bus protocol, from the input data stream (410) .

2. Method according to Claim 1,
wherein fields (110) are decoded while the input transmission frame (100, 411) is being received.

3. Method according to either of the preceding claims,
wherein a first of the field processing units (310, 311) detects a start of the input transmission frame (100, 411),
wherein starting positions of fields (110) of the input transmission frame (100, 411) are determined depending on a position of the start of the input transmission frame (100, 411).

4. Method according to Claim 3,
wherein each starting position comprises a number of a data unit (240) and an index within the data unit (240).

5. Method according to one of the preceding claims, wherein decoding a field (110) of the input transmission frame (100, 411) in a second of the field processing units (310, 312) comprises reading information (430).

6. Method according to Claim 5,
wherein the second field processing unit (310, 312) logically combines the information (430) with the output data stream (420).

7. Method according to Claim 6,
wherein the information (430) is buffer-stored in a register stage (330) before being combined with the output data stream (420).

8. Method according to one of Claims 5 to 7,
wherein the second field processing unit (310, 312) forwards the information (430) to a third field processing unit (310, 313) downstream of the second field processing unit (310, 312).

9. Method according to Claim 8,
wherein the second field processing unit (310, 312) forwards the information (430) together with the input data stream (410) and the output data stream (420) as a bundle of information (440) to the third field processing unit (310, 313).

10. Method according to Claim 9,
wherein the bundle of information (440) is buffer-stored in a register stage (320) between the second field processing unit (310, 312) and the third field processing unit (310, 313).

11. Method according to one of the preceding claims, wherein the field bus protocol is EtherCAT, wherein the input transmission frame (100, 411) is an EtherCAT transmission frame.

12. Method according to one of the preceding claims, wherein the processing width (220) is 64 bits.

13. Network subscriber (300)
which is designed to receive an input data stream (410), which contains an input transmission frame (100, 411) in accordance with a field bus protocol, in temporally successive data units (240) which have a defined processing width (220) and to generate an output data stream (420) from the input data stream (410), which output data stream contains an output transmission frame (100, 421) in accordance with the field bus protocol,
wherein the network subscriber (300) has a plurality of field processing units (310) arranged behind one another, wherein each field processing unit (310) is designed to decode a defined field (110) of the input transmission frame (100, 411).

14. Network subscriber (300) according to Claim 13,
wherein a first of the field processing units (310, 311) is designed to detect a start of the input transmission frame (100, 411),
wherein the network subscriber (300) is designed to determine starting positions of fields (110) of the input transmission frame (100, 411) depending on a position of the start of the input transmission frame (100, 411).

15. Network subscriber (300) according to either of Claims 13 and 14,
wherein a second of the field processing units (310, 312) is designed such that decoding a field (110) of the input transmission frame (100, 411) comprises reading information (430).

16. Network subscriber (300) according to Claim 15,
wherein the second field processing unit (310, 312) is designed to logically combine the information (430) with the output data stream (420).

17. Network subscriber (300) according to Claim 16,
wherein a register stage (330) is provided in order to buffer-store the information (430) before it is combined with the output data stream (420).

18. Network subscriber (300) according to one of Claims 15 to 17,
wherein the second field processing unit (310, 312) is designed to forward the information (430) to a third field processing unit (310, 313) downstream of the second field processing unit (310, 312).

19. Network subscriber (300) according to Claim 18,
wherein the second field processing unit (310, 312) is designed to forward the information (430) together with the input data stream (410) and the output data stream (420) as a bundle of information (440) to the third field processing unit (310, 313).

20. Network subscriber (300) according to Claim 19,
wherein a register stage (320) is provided in order to buffer-store the bundle of information (440) between the second field processing unit (310, 312) and the third field processing unit (310, 313).

## Revendications

1. Procédé permettant de faire fonctionner un abonné réseau (300),
comprenant les étapes consistant à :
- recevoir un flux de données d'entrée (410) qui contient une trame de transmission d'entrée (100, 411) selon un protocole de bus de terrain,
le flux de données d'entrée (410) étant reçu par unités de données (240) se succédant dans le temps qui présentent une bande passante déterminée (220) ;
- décoder des champs (110) de la trame de transmission d'entrée (100, 411) par une pluralité d'unités de traitement de champ (310) disposées les unes après les autres, chaque unité de traitement de champ (310) décodant un champ déterminé (110) de la trame de transmission d'entrée (100, 411) ;
- générer à partir du flux de données d'entrée (410) un flux de données de sortie (420) qui contient une trame de transmission de sortie (100, 421) selon le protocole de bus de terrain.

2. Procédé selon la revendication 1,
dans lequel le décodage de champs (110) a lieu pendant que la trame de transmission d'entrée (100, 411) est reçue.

3. Procédé selon l'une quelconque des revendications précédentes,
dans lequel une première des unités de traitement de champ (310, 311) reconnaît un début de la trame de transmission d'entrée (100, 411),
dans lequel les positions de début des champs (110) de la trame de transmission d'entrée (100, 411) sont détectées en fonction d'une position du début de la trame de transmission d'entrée (100, 411).

4. Procédé selon la revendication 3,
dans lequel chaque position de début comprend un numéro d'une unité de données (240) et un indice à l'intérieur de l'unité de données (240).

5. Procédé selon l'une quelconque des revendications précédentes,
dans lequel le décodage d'un champ (110) de la trame de transmission d'entrée (100, 411) comprend la lecture d'une information (430) pour une deuxième des unités de traitement de champ (310, 312).

6. Procédé selon la revendication 5,
dans lequel la deuxième unité de traitement de champ (310, 312) associe logiquement l'information (430) au flux de données de sortie (420).

7. Procédé selon la revendication 6,
dans lequel l'information (430) est mise en mémoire tampon avant d'être associée au flux de données de sortie (420) dans un étage de registre (330).

8. Procédé selon l'une quelconque des revendications 5 à 7,
dans lequel la deuxième unité de traitement de champ (310, 312) retransmet l'information (430) à une troisième unité de traitement de champ (310, 313) suivant la deuxième unité de traitement de champ (310, 312) .

9. Procédé selon la revendication 8,
dans lequel la deuxième unité de traitement de champ (310, 312) retransmet l'information (430) en même temps que le flux de données d'entrée (410) et le flux de données de sortie (420) sous forme de faisceau d'information (440) à la troisième unité de traitement de champ (310, 313).

10. Procédé selon la revendication 9,
dans lequel le faisceau d'information (440) est mis en mémoire tampon entre la deuxième unité de traitement de champ (310, 312) et la troisième unité de traitement de champ (310, 313) dans un étage de registre (320).

11. Procédé selon l'une quelconque des revendications précédentes,
dans lequel le protocole de bus de terrain est EtherCAT, la trame de transmission d'entrée (100, 411) étant une trame de transmission EtherCAT.

12. Procédé selon l'une quelconque des revendications précédentes,
dans lequel la bande passante (220) est de 64 bits.

13. Abonné réseau (300) qui est réalisé pour recevoir un flux de données d'entrée (410) qui contient une trame de transmission d'entrée (100, 411) selon un protocole de bus de terrain, dans des unités de données (240) se succédant dans le temps qui présentent une bande passante déterminée (220), et pour générer à partir du flux de données d'entrée (410) un flux de données de sortie (420) qui contient une trame de transmission de sortie (100, 421) selon le protocole de bus de terrain,
l'abonné réseau (300) présentant une pluralité d'unités de traitement de champ (310) disposées les unes après les autres, chaque unité de traitement de champ (310) étant réalisée pour décoder un champ déterminé (110) de la trame de transmission d'entrée (100, 411).

14. Abonné réseau (300) selon la revendication 13,
dans lequel une première des unités de traitement de champ (310, 311) est réalisée pour reconnaître le début de la trame de transmission d'entrée (100, 411),
l'abonné réseau (300) étant réalisé pour détecter les positions de début des champs (110) de la trame de transmission d'entrée (100, 411) en fonction d'une position du début de la trame de transmission d'entrée (100, 411).

15. Abonné réseau (300) selon l'une quelconque des revendications 13 et 14,
dans lequel une deuxième des unités de traitement de champ (310, 312) est réalisée de telle sorte que le décodage d'un champ (110) de la trame de transmission d'entrée (100, 411) comprend la lecture d'une information (430).

16. Abonné réseau (300) selon la revendication 15,
dans lequel la deuxième unité de traitement de champ (310, 312) est réalisée pour associer logiquement l'information (430) au flux de données de sortie (420).

17. Abonné réseau (300) selon la revendication 16,
dans lequel un étage de registre (330) est prévu pour mettre en mémoire tampon l'information (430) avant de l'associer au flux de données de sortie (420).

18. Abonné réseau (300) selon l'une quelconque des revendications 15 à 17,
dans lequel la deuxième unité de traitement de champ (310, 312) est réalisée pour retransmettre l'information (430) à une troisième unité de traitement de champ (310, 313) suivant la deuxième unité de traitement de champ (310, 312).

19. Abonné réseau (300) selon la revendication 18,
dans lequel la deuxième unité de traitement de champ (310, 312) est réalisée pour retransmettre l'information (430) en même temps que le flux de données d'entrée (410) et le flux de données de sortie (420) sous forme de faisceau d'information (440) à la troisième unité de traitement de champ (310, 313).

20. Abonné réseau (300) selon la revendication 19,
dans lequel un étage de registre (320) est prévu pour mettre en mémoire tampon le faisceau d'information (440) entre la deuxième unité de traitement de champ (310, 312) et la troisième unité de traitement de champ (310, 313).
